# EUROPEAN PATENT SPECIFICATION

(11) **EP 1 694 888 B1**
(45) Date of publication and mention of the grant of the patent: **08.10.2008**
(21) Application number: 03819262.1
(22) Date of filing: 19.12.2003
(51) Int. Cl.: D01D 1/02, C08J 3/075, D01F 6/04

(54) **A PROCESS FOR PREPARING ULTRA HIGH MOLECULAR WEIGHT POLYETHYLENE FIBRES**
VERFAHREN ZUM HERSTELLEN VON POLYETHYLENFASERN MIT ULTRAHOHEM MOLEKULARGEWICHT
PROCEDE PERMETTANT DE PREPARER DES FIBRES EN POLYETHYLENE DE MASSE MOLECULAIRE TRES ELEVEE

(43) Date of publication of application: 30.08.2006
(73) Proprietor: Sinotex Investment & Development Co., Ltd., 1228 Yan An Road (W) Shangai (CN)
(72) Inventor: DU, Wei, Beijing (CN)
(74) Representative: Gervasi, Gemma
(86) International application number: PCT/IB2003/006414
(87) International publication number: WO 2005/066397

(56) References cited:
- CN-A- 1 190 137
- CN-A- 1 405 367
- CN-A- 1 465 757
- US-A- 3 048 465
- US-A- 5 342 567

## Description

### Field of the invention

The present invention relates to a process for preparing ultra high molecular weight polyethylene fibres (UHMWPE) fibres.

### Technological background

Processes for preparing UHMW polyolefin and in particular polyethylene fibres, having excellent mechanical properties have been known since many years and they comprise extruding a gel obtained by dispersing UHMWPE in a suitable solvent and finally stretching the extruded product.

However these processes suffer from a series of drawbacks because of the complex technology involved which render them particularly expensive and uneconomic.

First of all it is practically impossible to prepare uniform gels having a high concentration in polyethylene without the formation of bubbles, in addition said mixtures are extremely viscous and sticky and can be worked only by increasing considerably the temperature and prolonging the mixing times. But under these conditions UHMWPE tends to degrade bringing to polyethylene having much lower molecular weights and therefore to the detriment of the rheologic and mechanic properties of the final products i.e. the fibres.

A solution to the aforesaid drawbacks is found in the process disclosed in CN 1405367 a process, which encompasses for the preparation of the gel the following steps:
i) preparing a mixture (A) of ultra high molecular weight polyethylene in a paraffin oil having a concentration in said polymer ranging from 0.3 to 2% by weight on the total mixture weight,
ii) adding to a part of the mixture (A) polyethylene powder until obtaining a mixture (B) having a final concentration in said polyethylene of from 25 to 60% by weight,
iii) mixing mixture (A) with (B),
iv) extruding the mixture coming from step (iii), thereby obtaining UHMWPE fibres. This process, which encompasses the use of higher concentration in UHMWPE if compared to the known processes represents an undoubtful improvement since it permits to reduce the production preparation times of the gel of about of 1/8 -1/12 the production times if compared to conventional processes.

However it presents a considerable drawback due to the solvent chosen in the preparation of the gel, namely a paraffin oil.

Many types of solvents have been used for the preparation UHMWPE fibres in conventional processes. For example chloro-fluoro-hydrocarbons (Freon®) were firstly utilised as they efficiently dissolve UHMWPE powders, however these solvent can no longer be utilised as highly polluting (they favour the formation of ozone hole).

In JP88-15838 kerosene is used as solvent. However this type of solvent suffers from a series of drawbacks due to the fact that it tends to volatilise at very low temperatures.

Paraffin oil was also used however also this type of solvent shows considerable drawbacks.

In fact when a paraffin oil is used having a low molecular weight (low distillation fraction) it tends to volatilise at the operating conditions of fibres productions, causing the formation of bubbles inside the fibres reducing considerably the mechanical properties thereof.

By contrast, paraffin oil having a higher molecular weight, (high distillation fraction) is not able to dissolve efficiently the UHMWPE powders.

US 5,342,567 discloses the use of a lower cycloalkane or cycloalkene as the solvent for UHMWPE.

Although this reference encompasses that this solvent can be used for preparing concentration in UHMWPE at most of 20% by wt, in the practical examples therein reported the concentration of said polymer in lower cycloalkane and cycloalkene is 5%.

In fact the above solvents have a boiling point lower than 200°C. Therefore the extrusion temperature must be lower than 200°C. Under these operating conditions the maximum concentration in UHMWPE which can be still worked is in fact 5-6%.

The need was felt to find a solvent having a low tendency to volatilise and contemporaneously being able to efficiently dissolve UHMWPE powders which could be in particular utilised in the preparation process described in the aforementioned CN 1405367.

### Summary of the invention

The Applicant has now unexpectedly found that the aforementioned drawbacks can be easily overcome with a paraffin oil consisting of a mixture of saturated cycloparaffins and saturated aliphatic paraffins both type of said paraffins having from 25 to 50 carbon atoms.

Therefore the present invention relates to a process comprising the following steps:
I) preparing a gel of UHMW polyolefin and more preferably UHMWPE fibres in a solvent,
II) extruding the gel obtained in the preceding step thereby obtaining a gel fibre,
III) extracting the solvent from the fibres ,
IV) stretching the fibre coming from the preceding step,
characterised in that the solvent consists of a mixture of saturated cycloparaffins and saturated aliphatic paraffins both type of paraffins having from 25 to 50 carbon atoms said paraffin oil containing from 80 to 95% of said cycloparaffins, and from 20 to 5% of said aliphatic saturated paraffins.

More in particular the present invention relates to a process for preparing UHMWPE fibres comprising the following steps:
i) preparing a mixture (A) of ultra high molecular weight polyethylene in a solvent having a concentration in said polymer ranging from 0.3 to 2% by weight on the total mixture weight,
ii) adding to a part of the mixture (A) polyethylene powder until obtaining a mixture (B) having a final concentration in said polyethylene of from 25 to 60% by weight,
iii) mixing mixture (A) with (B),
iv) extruding the mixture coming from step (iii), thereby obtaining UHMWPE fibres,
v) extracting the paraffin oil from said fibres,
vi) stretching the fibres coming from step (v),
characterised in that the solvent consists of a mixture of saturated cycloparaffins and saturated aliphatic paraffins both type of paraffins having from 25 to 50 carbon atoms said paraffin oil containing from 80 to 95% of said cycloparaffins, and from 20 to 5% of said aliphatic saturated paraffins.

### Detailed description of the invention

The paraffin oil used in the process according to the present invention contains from 80 to 95%, preferably from 85-90% of said saturated cycloparaffins, from 20 to 5%, preferably 15-10% of said saturated aliphatic paraffins.

The solvent used in the process according to the present invention have a density ranging from 0.84-0.87g/cm³, no gas evaporation is observed at temperatures lower than 400°C, and the flash point is higher than 260°C.

According to a particularly preferred embodiment the cycloparaffin oil components in the paraffin oil according to the present invention has the following composition:
Monocyclic paraffin 18 -20% by wt.;
Bicyclic paraffin 20-22%,
Tri-cyclic paraffin 16-18%,
Tetra-cyclic paraffin 10-14%,
Penta-cyclic paraffin 10-12%,
Hexa-cyclic paraffin 6-8%

The UHMWPE used in the process according to the present invention has preferably a molecular weight ranging from 1,000,000 and 10,000,000, more preferably from 1,000,000 and 7,000,000 with a particle size ranging from 80 to 200µm

The preferred operating conditions for carrying step (i) -(iii) of the process according to the present invention are those reported in the aforementioned Chinese Patent Application CN1405367.

These steps are preferably carried out in an awl-shape vessel enduring high pressure and able to rotate and make revolutions. Inside the wall of the awl shape boiler is preferably placed an ultrasonic source with a frequency ranging from 1x10⁴ to 4x10⁴ preferably 1.5x10⁴ -2.5 x10⁴ Hz the ultrasonic power is preferably comprised between 2kW and 5 kW.

In particular step (i) is carried out according to the following preferred operating conditions:
1)spraying polyethylene powders into said paraffin solvent previously heated at a temperature ranging from 80 to 90 °C,
2) stirring and heating the mixture under vacuum until reaching a temperature ranging from 150 to 250°C,
3) optionally adding inorganic fillers
4) stirring the mixture until it becomes transparent
5) cooling the mixture up to a temperature about 5-10°C higher than the separation temperature of UHMWPE (solute) from the solvent in order to pump it into a storage container and increasing the pressure until reaching the atmospheric pressure,
6) pumping it into a storage container.

In step (2):
the heating rate is preferably comprised between 0.2 and 0.5°C/min, the final temperature is preferably comprised between 120-220°C,
the residual pressure is comprised between 0.04 and 0.06Mpa,
revolution rate 50-100rpm, rotation rate 300-500rpm.

In step (3) the inorganic filler is preferably selected from the group consisting of SiO₂, Al₂O₃, Ag, SrO₂, .

As soon as the temperature decreases the solution from transparent become milky and when the same reaches the aforementioned separation temperature becomes a sticky gel. The separation temperature of the solute from the solvent mentioned in step (5) varies according to the molecular weight of UHMWPE and it is generally comprised between 70 and 90°C.

The concentration of UHMWPE in the mixture (A) is preferably comprised between 0.5 and 1.5%.

In particular step (ii), namely the preparation of mixture (B) preferably comprises: spraying polyethylene into solution (A) under stirring and under vacuum and gradually heating the mixture to a temperature ranging from 60 to 190°C.

The heating rate is preferably comprised between 0.05 and 0.08°C/min, the residual pressure is preferably comprised between 0.04 and 0.06Mpa.

According to a particularly preferred embodiment the preparation of solution B is divided into three distinct phases, in order to increase gradually the polymer concentration.

Step (iii), namely the mixing of mixture (A) with (B) preferably comprises the following steps:
1') stirring and heating the mixture (A) at a temperature 10°C higher than the separation temperature of the solute from the solvent,
2') adding (B) at the same temperature and spraying paraffin oil until obtaining a concentration of from 12 to 60% in UHMWPE.

Step (iv) of the process according to the present invention is preferably carried out according to the following operating conditions. The mixture coming from step (iii) cooled to 50 -70°C by the addition of cool intermediates is pumped to a double screw extruder wherein it is heated at a temperature higher than 200°C and finally extruded into a fibre.

According to a particularly preferred embodiment the ratio diameter/length in the screw extruder is higher than 1:45 in order to guarantee a sufficient permanence time of the gel.

The Applicant has also unexpectedly found an advantageous process for extracting the paraffin oil from the fibres, without the drawbacks of prior art methods.

In fact the paraffin solvent must be eliminated from the fibres before the same are stretched otherwise the fibres tend to slip when subjected to stretching and moreover fibres containing high amounts of solvents are characterised by having poor mechanical properties.

Many type of solvents have been used to extract the solvents contained in the fibres such as kerosene, gasoline, chloro-fluoro hydrocarbons, but all these solvents can no longer be used as they are unsafe or extremely polluting.

The aforementioned USP5342567 encompasses the use of expensive extractions solvents such as cyclic ketones.

In addition the solvent extraction step has a series of drawbacks.

First of all by using ultrasonic extraction it is possible to increase the extraction ability of a specific solvent as it clearly results from the following table 1

**TABLE 1 - EXTRACTION SOLVENT ABILITY¹**

| Extraction solvent | CH₂Cl₂ | CCl₄ | gasoline | Xylenes | CH₂Cl₂ |
|---|---|---|---|---|---|
| Stationary extraction² | 8.68 | 9.52 | 10.30 | 14.20 | 15.44 |
| Ultrasonic extraction² | 11.95 | 13.10 | 14.20 | 17.31 | 18.62 |

| | | | | | |
|---|---|---|---|---|---|
| ¹: (%) of extracted solvent calculated as follows: 100x(weight of the fibre before stretching - weight of the fibre after stretching)/weight of the fibre before stretching. ²: the extraction was carried out by placing the fibre in contact with the extraction solvent for 2 seconds. | | | | | |

However contemporaneously the solvent volatility increases with ultrasonic energy and this represents a particular problem when a low boiling point solvent is used for this purpose such as dichloromethane gasoline or carbon tetrachloride.

In fact the increase of solvent volatility increases both the cost of the fibre, since higher amounts of solvent extraction must be used and pollution environment.

In addition the extraction process tends to cause a fibre shrinkage essentially due to the following factors.

First of all the extraction solvent (with low molecular weight) replaces the paraffin oil (with high molecular weight), causing the formation of voids or holes inside the fibre. This phenomenon increases when the extraction solvent is removed from the fibre by evaporation.

The fibre shrinkage brings to a progressive increase in PE cristallinity worsening the stretching properties of the polymer as evidenced in the following table.

**TABLE 2 -EFFECT OF THE SHRINK RATE AFTER EXTRACTION AND EVAPORATION OF THE SOLVENT EXTRACTION ON CRISTALLINITY AND STRETCHING PROPERTY**

| Shrink rate¹ (%) | 0 | 10 | 20 | 30 | 42 |
|---|---|---|---|---|---|
| Xc(%)² | 56.32 | 57.38 | 58.6 | 59.9 | 60.71 |
| Rm³ | 24.8 | 23 | 21.1 | 19.3 | 17.7 |

| | | | | | |
|---|---|---|---|---|---|
| ¹:is calculated as follows: 100 x fibre length before extraction /fibre length after extraction and solvent extraction evaporation, ²: degree of fibre crystallisation detected by using X-ray diffractometer of Rigaku D/MAX-RB (Japan) 2 θ angle is in the range of 10-30°. ³: length of the fibre at break after extraction and extraction solvent evaporation /length of the fibre before extraction | | | | | |

The Applicant has unexpectedly found a process overcoming the aforementioned drawbacks and in addition allowing to carry out the extraction and drying step (step v), and the subsequent stretching step (vi) in continuous, recycling the extraction solvent:

In particular the process found by the Applicant comprises the following steps:
(a) pre-stretching the fibres up to a stretching ratio (length of the fibres after stretching / length of the fibre before stretching value comprised between 2:1 and 10:1;
(b) extracting the solvent from the fibres, and drying under stretching
(c) carrying out stretching in three stages.

Step (a) is preferably carried out at room temperature and the fibre is preferably pre-stretched up to a stretching ratio value comprised between 2:1 and 6: 1.

Step (b), is preferably carried out using ultrasonic energy and utilising an extraction solvent selected from the group consisting of: dichloromethane and xylenes.

When the extraction solvent is dichloromethane and the extraction is carried out by using ultrasonic energy the fibre is enveloped in a bed of water in order to reduce the amount of solvent evaporation. The drying temperature in step (b)is generally lower than 40°C preferably comprised between 10 and 30°C.

The preferred operating conditions for carrying out step (c) are the following
- First stage stretching: 100°C and stretching up to stretching ratio value comprised between 6:1 and 10:1,
- Second stage stretching : 110°C and stretching up to stretching ratio value comprised between 2: 1 and 1:1,
- Third stage stretching: 120°C and stretching up to stretching ratio value comprised between 1.5:1 and 1:1.

We report herewith for comparative but not limitative purposes the following examples of the process according to the present invention.

### EXAMPLE 1 (REFERENCE)

### Preparation of mixture A

UHMWPE having an average molecular weight of 4,000,000 was sprayed into a paraffinic oil having 85% cycloparaffin component with a number of carbon atom ranging from 25 to 50 and the following composition
Monocyclic paraffin 18 -20% by wt.;
Bicyclic paraffin 20-22%,
Tri-cyclic paraffin 16-18%,
Tetra-cyclic paraffin 10-14%,
Penta-cyclic paraffin 10-12%,
Hexa-cyclic paraffin 6-8%
and 15% of saturated aliphatic paraffins having from 25 to 50 carbon atoms, said paraffin oil being previously heated to 80-90°C. Said polymer is added in amounts that the final concentration of UHMWPE is 1%.The mixture is stirred under vacuum (residual pressure 0.05Mpa) and heated with a heating rate of 0.4°C/min, up to 180°C. The mixture is stirred at this temperature until complete dissolution (for about 40 minutes) The mixture is then cooled to a temperature 5-10°C higher than the separation temperature and pumped to a storage tank.

### Preparation of mixture B

Part of the mixture A is introduced into the vessel and heated to 120°C at 0.07°/min, then UHMWPE is sprayed into mixture (A) in such an amount that the concentration of said polymer be 24% in the final mixture (B).

### Preparation of mixture (A) and (B)

The mixture (A) is heated to a temperature 10°C higher than the separation temperature then mixture (B) is added and further paraffinic oil having the aforementioned composition in amounts such that the final concentration in said mixture is 12%. The mixture obtained comes out from the vessel at a temperature of 70°C.

### Extrusion

The mixture is extruded through a double screw extruder and the temperature inside the extruder is increased to 300°C so that a fibre form. Subsequently the solvent is extracted according to conventional methods by using dichloromethane as the extraction solvent. Then the fibre is stretched up to a stretching ratio equal to 40:1 and the fibre after stretching show a tenacity of 35 g/d and a modulus of 2200g/d. The fibre does not break after 100 hours wounding.

### EXAMPLE 2 (COMPARATIVE)

The same example 1 is repeated with the only difference that a paraffin oil is used having a cycloparaffin content lower than 20%, whereas the remaining components are linear saturate paraffins.

The fibre breaks before 100 hours wounding and the standard of production is not uniform.

### EXAMPLE 3 (COMPARATIVE)

The same example 1 is repeated with the only difference that a paraffin oil having a content in cyclo paraffin oil of from 25 to 50 carbon atoms of 50%. The standard of production is not uniform; a fibre is obtained having a tenacity of 18g/d the modulus is 600g/d and the breaking rate is higher than 5/10000 m, the quality of the fibre is not good.

### EXAMPLE 4 (COMPARATIVE)

Example 1 is repeated with the only difference that a paraffin oil is obtained having a C25-C50 cycloparaffin content of 50%,
aromatic content 4%,
alkyl paraffin content of 46%
The fibre obtained has the following mechanical properties: tenacity 20 g/d, modulus is 900 g/d the colour of the fibre is yellow and the quality of the fibre is not good.

### EXAMPLE 5

Example 1 is repeated with the only difference that the extraction solvent and stretching is carried out according to the operating conditions herein below reported
The fibre coming from the extruder is subjected to a pre-stretching up to a stretching ratio equal to 3 at room temperature. Then the fibre under stretching is placed in contact with dichloromethane and then are died at room temperature. Then the first stage of stretching is carried out up to a stretching ratio equal to 8:1 at 100°C, then the second stage of stretching is carried out up to a stretching ratio equal to 1.4 at 110°C, and finally the third stage of stretching up to a stretching ratio equal to 1.1 at 120°C.

The above operating conditions concerning pre-stretching, solvent extraction drying of the fibre and three stages stretching are carried out in continuous.

A fibre is obtained having a 33.5 g/d, the modulus is 1269 g/d and the elongation at break is 3.61 %. The extraction solvent recycle rate is 92%

### EXAMPLE 6

Example 5 is repeated with the only difference that a xylene is used as the extraction solvent. The tenacity of the fibre obtained is 32.1 g/d, the modulus 1224g/d, the elongation at break is 3.57%. The extraction solvent recycle rate is 88%.

## Claims

1. A process for preparing ultra high molecular weight polyolefin fibres comprising the following steps:
I) preparing a gel of UHMW polyolefin in a solvent,
II) extruding the gel obtained in the preceding step thereby obtaining a gel fibre,
III) extracting the solvent from the fibres ,
IV) stretching the fibre coming from the preceding step,
**characterised in that** the solvent consists of a mixture of saturated cycloparaffins and saturated aliphatic paraffins both type of paraffins having from 25 to 50 carbon atoms , said paraffin oil containing from 80 to 95% of said cycloparaffins, and from 20 to 5% of said aliphatic saturated paraffins.

2. The process according to claim 1, wherein said polyolefin is polyethylene.

3. The process according to claims 2 wherein said oil contains 85-90% of said cycloparaffins and 15-10% of said aliphatic saturated paraffins.

4. A process for preparing ultra high molecular weight polyethylene (UHMWPE) fibres comprising the following steps:
i) preparing a mixture (A) of ultra high molecular weight polyethylene in a solvent having a concentration in said polymer ranging from 0.3 to 2% by weight on the total mixture weight,
ii) adding to a part of the mixture (A) polyethylene powder until obtaining a mixture (B) having a final concentration in said polyethylene of from 25 to 60% by weight,
iii) mixing mixture (A) with (B),
iv) extruding the mixture coming from step (iii), thereby obtaining UHMWPE fibres,
v) extracting the paraffin oil from said fibres,
vi) stretching the fibres coming from step (v),
**characterised in that** the solvent consists of a mixture of saturated cycloparaffins and saturated aliphatic paraffins both type of paraffins having from 25 to 50 carbon atoms said paraffin oil containing from 80 to 95% of said cycloparaffins, and from 20 to 5% of said aliphatic saturated paraffins.

5. The process according to claim 4 wherein said oil contains 85-90% of said cycloparaffins and 15-10% of said aliphatic saturated paraffins.

6. The process according to anyone of claims 4-5" wherein the cycloparaffin is a mixture of cycloparaffin having the following composition:
Monocyclic paraffin 18 -20% by wt.;
Bicyclic paraffin 20-22%,
Tri-cyclic paraffin 16-18%,
Tetra-cyclic paraffin 10-14%,
Penta-cyclic paraffin 10-12%,
Hexa-cyclic paraffin 6-8%.

7. The process according to claim 4, wherein UHMWPE has a molecular weight ranging from 1,000,000 and 10,000,000.

8. The process according to claim 7 wherein said molecular weight ranges from 1,000,000 and 7,000,000.

9. The process according to anyone of claims 4-8, wherein step (i)-(iii) are carried out in awl-shape vessel enduring high pressure and able to rotate and make revolutions.

10. The process according to anyone of claims 4-9, wherein step (i) comprises the following operating conditions:
1) spraying polyethylene powders into said paraffin solvent previously heated at a temperature ranging from 80 to 90 °C,
2) stirring and heating the mixture under vacuum until reaching a temperature ranging from 150 to 250°C,
3) optionally adding inorganic fillers,
4) stirring the mixture until it becomes transparent,
5) cooling the mixture up to a temperature about 5-10°C higher than the separation temperature of UHMWPE (solute) from the solvent and increasing the pressure until reaching the atmospheric pressure,
6) pumping it into a storage container.

11. The process according to anyone of claims 4-10 , wherein the concentration of UHMWPE is comprised between 0.5 and 1.5%.

12. The process according to anyone of claims 4-11, wherein step(ii) comprises: spraying polyethylene into solution (A) under stirring and under vacuum and gradually heating the mixture to a temperature ranging from 60 to 190°C.

13. The process according to anyone of claim 4-12, wherein step (iii) comprises the following steps:
1') stirring and heating the mixture (A) at a temperature 10°C higher than the separation temperature of the solute from the solvent,
2') adding (B) at the same temperature and spraying paraffin oil until obtaining a concentration of from 12 to 60% in UHMWPE.

14. The process according to anyone of claims 4-13 wherein the extrusion is carried out in a double screw extruder.

15. The process according to anyone of claims 4-14, wherein step (v) and (vi) are carried out in continuous according to the following operating conditions:
(a) pre-stretching the fibres up to a stretching ratio value comprised between 2:1 and 10:1;
(b) extracting the paraffin oil from the fibres, and drying under stretching.
(c) carrying out stretching in three stages.

16. The process according to claim 14, wherein step (a) is carried out at room temperature and the fibre is pre-stretched up to a stretching ratio value comprised between 2:1 and 6: 1.

17. The process according to anyone of claim 15 and 16 wherein step (b) is carried out by using an extraction solvent selected from the group consisting of dichloromethane and xylenes.

18. The process according to claim 17 wherein the extraction is carried out using ultrasonic energy.

19. The process according to claim 18 wherein, when dichloromethane is used as the extraction solvent, the fibre is enveloped in a bed of water.

20. The process according to anyone of claims 15-19, wherein the drying temperature in step (b) is lower than 40°C.

21. The process according to claim 20, wherein said temperature is comprised between 10 and 30°C.

22. The process according to anyone of claims 15-21 wherein step (c) is carried out according to the following operating conditions:
□ First stage stretching: 100°C and stretching up to a stretching ratio value comprised between 6:1 and 10:1,
□ Second stage stretching : 110°C and stretching up to a stretching ratio value comprised between 2: 1 and 1:1,
□ Third stage stretching: 120°C and stretching up to a stretching ratio value comprised between 1.5:1 and 1:1.

## Patentansprüche

1. Verfahren zur Herstellung von Fasern aus Polyolefin mit ultrahohem Molekulargewicht, umfassend die folgenden Schritte:
I) Herstellung eines Gels eines UHMW-Polyolefins in einem Lösungsmittel,
II) Extrudieren des im vorhergehenden Schritt erhaltenen Gels, wodurch eine Gelfaser erhalten wird,
III) Extrahieren des Lösungsmittels aus den Fasern,
IV) Verstrecken der aus dem vorhergehenden Schritt kommenden Faser,
**dadurch gekennzeichnet, dass** das Lösungsmittel aus einer Mischung von gesättigten Cycloparaffinen und gesättigten aliphatischen Paraffinen besteht, wobei beide Arten von Paraffinen 25 bis 50 Kohlenstoffatome enthalten und genanntes Paraffinöl 80 bis 95 % genannter Cycloparaffine und 20 bis 5 % genannter aliphatischer, gesättigter Paraffinen enthält.

2. Verfahren gemäß Anspruch 1, wobei das genannte Polyolefin Polyethylen ist.

3. Verfahren gemäß Anspruch 2 wobei genanntes Öl 85 - 90 % genannter Cycloparaffine und 15 - 10 % genannter aliphatischer gesättigter Paraffine enthält.

4. Verfahren zur Herstellung von Fasern aus Polyolefin mit ultrahohem Molekulargewicht (UHMWPE), umfassend die folgenden Schritte:
i) Herstellen einer Mischung (A) aus Polyethylen mit ultrahohem Molekulargewicht in einem Lösungsmittel mit einer Konzentration an genanntem Polymer im Bereich von 0,3 bis 2 Gew.-% des Gesamtgewichts der Mischung,
ii) Zugeben eines Teils des Mischung-(A)-Polyethylenpulvers bis eine Mischung (B) mit einer Endkonzentration an genanntem Polyethylen von 25 bis 60 Gew.-% erhalten wird,
iii) Mischen der Mischung (A) mit (B),
iv) Extrudieren der aus Schritt (iii) kommenden Mischung, wodurch UHMWPE-Fasern erhalten werden,
v) Extrahieren des Paraffinöls aus genannten Fasern,
vi) Verstrecken der aus Schritt (v) kommenden Fasern,
**dadurch gekennzeichnet, dass** das Lösungsmittel aus einer Mischung aus gesättigten Cycloparaffinen und gesättigten aliphatischen Paraffinen besteht, wobei beide Arten von Paraffinen 25 bis 50 Kohlenstoffatome enthalten und genanntes Paraffinöl 80 bis 95 % genannter Cycloparaffine und 20 bis 5 % genannter aliphatischer, gesättigter Paraffinen enthält.

5. Verfahren gemäß Anspruch 4 wobei genanntes Öl 85 - 90 % genannter Cycloparaffine und 15 - 10 % genannter aliphatischer gesättigter Paraffine enthält.

6. Verfahren gemäß einem der Ansprüche 4 - 5, wobei das Cycloparaffin eine Cycloparaffinmischung mit der folgenden Zusammensetzung ist:
Monocyclisches Paraffin 18 - 20 Gew.-%,
Bicyclisches Paraffin 20 - 22 Gew.-%,
Tricyclisches Paraffin 16 - 18 Gew.-%,
Tetracyclisches Paraffin 10 - 14 Gew.-%,
Pentacyclisches Paraffin 10 - 12 Gew.-%,
Hexacyclisches Paraffin 6 - 8 Gew.-%.

7. Verfahren gemäß Anspruch 4, wobei das UHMWPE ein Molekulargewicht im Bereich von 1.000.000 und 10.000.000 aufweist.

8. Verfahren gemäß Anspruch 7, wobei genanntes Molekulargewicht im Bereich von 1.000.000 und 7.000.000 liegt.

9. Verfahren gemäß einem der Ansprüche 4 - 8, wobei Schritt (i) - (iii) in einem wie eine Ahle geformten Gefäß, das hohen Druck aushält und rotieren und Drehungen ausführen kann, durchgeführt wird.

10. Verfahren gemäß einem der Ansprüche 4 - 9, wobei der Schritt (i) die folgenden Arbeitsbedingungen umfasst:
1) Sprühen von Polyethylenpulvern in genanntes Paraffinlösungsmittel, das vorher auf eine Temperatur im Bereich von 80 bis 90 °C erhitzt wurde,
2) Rühren und Erhitzen der Mischung unter Vakuum, bis eine Temperatur im Bereich von 150 bis 250 °C erreicht wurde,
3) gegebenenfalls Zugabe von anorganischen Füllstoffen,
4) Rühren der Mischung, bis sie transparent wird,
5) Abkühlen der Mischung auf eine Temperatur die etwa 5 - 10 °C höher als die Trennungstemperatur von UHMWPE (gelöster Stoff) vom Lösungsmittel liegt, und Erhöhen des Drucks bis Atmosphärendruck erreicht wird,
6) Pumpen der Mischung in einen Vorratsbehälter.

11. Verfahren gemäß einem der Ansprüche 4 - 10, wobei die Konzentration an UHMWPE zwischen 0,5 und 1,5 % liegt.

12. Verfahren gemäß einem der Ansprüche 4 - 11, wobei Schritt (ii) umfasst: Sprühen von Polyethylen in die Lösung (A) unter Rühren und unter Vakuum und allmähliches Erhitzen der Mischung auf eine Temperatur im Bereich von 60 bis 190 °C.

13. Verfahren gemäß einem der Ansprüche 4 - 12, wobei der Schritt (iii) die folgenden Schritte umfasst:
1') Rühren und Erhitzen der Mischung (A) auf eine Temperatur, die 10 °C höher als die Trennungstemperatur des gelösten Stoffs vom Lösungsmittel liegt,
2') Zugabe von (B) bei der gleichen Temperatur und Sprühen des Paraffinöls, bis eine Konzentration von 12 bis 60 % an UHMWPE erhalten wird.

14. Verfahren gemäß einem der Ansprüche 4 - 13, wobei die Extrusion in einem Doppelschneckenextruder ausgeführt wird.

15. Verfahren gemäß einem der Ansprüche 4 - 14, wobei der Schritt (v) und (vi) kontinuierlich gemäß der folgenden Arbeitsbedingungen durchgeführt wird:
(a) Vorverstrecken der Fasern bis zu einem Streckverhältniswert im Bereich zwischen 2:1 und 10:1;
(b) Extrahieren des Paraffinöls aus den Fasern und Trocknen unter Verstrecken,
(c) Ausführen des Vertreckens in drei Stufen.

16. Verfahren gemäß Anspruch 14, wobei Schritt (a) bei Raumtemperatur ausgeführt wird und die Faser bis zu einem Streckverhältniswert im Bereich zwischen 2:1 und 6:1 vorverstreckt wird.

17. Verfahren gemäß einem der Ansprüche 15 und 16, wobei Schritt (b) unter Verwendung eines Extraktionslösungsmittels, das aus der Gruppe bestehend aus Dichlormethan und Xylenen ausgewählt wird, durchgeführt wird.

18. Verfahren gemäß Anspruch 17, wobei die Extraktion unter Verwendung von Ultraschallenergie ausgeführt wird.

19. Verfahren gemäß Anspruch 18, wobei, wenn Dichlormethan als das Extraktionslösungsmittel verwendet wird, die Faser mit einem Wasserbett umhüllt wird.

20. Verfahren gemäß einem der Ansprüche 15 - 19, wobei die Trocknungstemperatur in Schritt (b) weniger als 40 °C beträgt.

21. Verfahren gemäß Anspruch 20, wobei genannte Temperatur im Bereich zwischen 10 °C und 30 °C liegt.

22. Verfahren gemäß einem der Ansprüche 15 - 21, wobei der Schritt (c) gemäß der folgenden Arbeitsbedingungen durchgeführt wird:
□ Erste Stufe Verstrecken: 100 °C und Verstrecken bis zu einem Streckverhältniswert im Bereich zwischen 6:1 und 10:1,
□ Zweite Stufe Verstrecken: 110 °C und Verstrecken bis zu einem Streckverhältniswert im Bereich zwischen 2:1 und 1:1,
□ Dritte Stufe Verstrecken: 120 °C und Verstrecken bis zu einem Streckverhältniswert im Bereich zwischen 1,5:1 und 1:1.

## Revendications

1. Procédé pour la préparation de fibres de polyoléfine de poids moléculaire très élevé comprenant les étapes suivantes :
I) préparer un gel de polyoléfine UHMW dans un solvant,
II) extruder le gel obtenu dans l'étape précédente, obtenant ainsi une fibre de gel,
III) extraite le solvant des fibres,
IV) étirer la fibre provenant de l'étape précédente,
**caractérisé en ce que** le solvant est constitué d'un mélange de cycloparaffines saturées et de paraffines aliphatiques saturées, les deux types de paraffines ayant de 25 à 50 atomes de carbone, ladite huile de paraffine contenant de 80 à 95 % desdites cycloparaffines, et de 20 à 5 % desdites paraffines aliphatiques saturées.

2. Procédé selon la revendication 1, dans lequel ladite polyoléfine est le polyéthylène.

3. Procédé selon la revendication 2, dans lequel ladite huile contient de 85 à 90 % desdites cycloparaffines et de 15 à 10 % desdites paraffines aliphatiques saturées.

4. Procédé pour la préparation de fibres de polyéthylène de poids moléculaire très élevé (UHMWPE) comprenant les étapes suivantes :
i) préparer un mélange (A) de polyéthylène de poids moléculaire très élevé dans un solvant ayant une concentration dans ledit polymère comprise dans la plage de 0,3 à 2 % en poids par rapport au poids total du mélange,
ii) ajouter à une partie du mélange (A), du polyéthylène en poudre jusqu'à l'obtention d'un mélange (B) ayant une concentration finale en ledit polyéthylène de 25 à 60 % en poids,
iii) mélanger le mélange (A) avec le mélange (B),
iv) extruder le mélange provenant de l'étape iii), obtenant ainsi des fibres d'UHMWPE,
v) extraire l'huile de paraffine desdites fibres,
vi) étirer les fibres provenant de l'étape (v),
**caractérisé en ce que** le solvant est constitué d'un mélange de cycloparaffines saturées et de paraffines aliphatiques saturées, les deux types de paraffines ayant de 25 à 50 atomes de carbone, ladite huile de paraffine contenant de 80 à 95 % desdites cycloparaffines, et de 20 à 5 % desdites paraffines aliphatiques saturées.

5. Procédé selon la revendication 4, dans lequel ladite huile contient de 85 à 90 % desdites cycloparaffines et de 15 à 10 % desdites paraffines aliphatiques saturées.

6. Procédé selon l'une quelconque des revendications 4 à 5, dans lequel la cycloparaffine est un mélange de cycloparaffine ayant la composition suivante :
paraffine monocyclique 18 à 20 % en poids,
paraffine bicyclique 20 à 22 %,
paraffine tricyclique 16 à 18 ,
paraffine tétracyclique 10 à 14 %,
paraffine pentacyclique 10 à 12 %,
paraffine hexacyclique 6 à 8 %.

7. Procédé selon la revendication 4, dans lequel l'UHMWPE a un poids moléculaire compris dans la plage allant de 1000000 à 10000000.

8. Procédé selon la revendication 7, dans lequel ledit poids moléculaire est compris dans la plage allant de 1000000 à 7000000.

9. Procédé selon l'une quelconque des revendications 4 à 8, dans lequel les étapes (i) à (iii) sont réalisées dans un récipient en forme d'alêne supportant une pression élevée et pouvant pivoter et faire des rotations.

10. Procédé selon l'une quelconque des revendications 4 à 9, dans lequel l'étape (i) comprend les conditions opératoires suivantes :
1) pulvériser les poudres de polyéthylène dans ledit solvant paraffinique préalablement chauffé à une température comprise dans la plage de 80 à 90 °C,
2) agiter et chauffer le mélange sous pression réduite jusqu'à l'obtention d'une température comprise dans la plage allant de 150 à 250 °C,
3) éventuellement ajouter des charges inorganiques,
4) agiter le mélange jusqu'à ce qu'il devienne transparent,
5) refroidir le mélange à une température environ 5 à 10 °C supérieure à la température de séparation de l'UHMWPE (soluté) du solvant et augmenter la pression jusqu'à atteindre la pression atmosphérique,
6) pomper le soluté dans une cuve de stockage.

11. Procédé selon l'une quelconque des revendications 4 à 10, dans lequel la concentration d'UHMWPE est comprise dans la plage allant de 0,5 à 1,5 %.

12. Procédé selon l'une quelconque des revendications 4 à 11, dans lequel l'étape (ii) comprend :
pulvériser le polyéthylène dans la solution (A) sous agitation et sous pression réduite et chauffer progressivement le mélange à une température comprise dans la plage allant de 60 à 190 °C.

13. Procédé selon l'une quelconque des revendications 4 à 12, dans lequel l'étape (iii) comprend les étapes suivantes :
1') agiter et chauffer le mélange (A) à une température de 10 °C supérieure à la température de séparation du soluté du solvant,
2') ajouter (B) à la même température et pulvériser l'huile de paraffine jusqu'à l'obtention d'une concentration de 12 à 60 % dans l'UHMWPE.

14. Procédé selon l'une quelconque des revendications 4 à 13, dans lequel l'extrusion est réalisée dans une extrudeuse à double vis.

15. Procédé selon l'une quelconque des revendications 4 à 14, dans lequel les étapes (v) et (vi) sont réalisées en continue selon les conditions opératoires suivantes :
(a) pré-étirer les fibres jusqu'à un rapport d'étirement compris dans la plage allant de 2/1 à 10/1 ;
(b) extraire l'huile de paraffine des fibres, et sécher pendant l'étirement ;
(c) réaliser l'étirement en trois stades.

16. Procédé selon la revendication 14, dans lequel l'étape (a) est réalisée à la température ambiante et la fibre est pré-étirée jusqu'à un rapport d'étirement compris dans la plage allant de 2/1 à 6/1.

17. Procédé selon l'une quelconque des revendications 15 et 16, dans lequel l'étape (b) est réalisée en utilisant un solvant d'extraction choisi dans le groupe constitué par le dichlorométhane et les xylènes.

18. Procédé selon la revendication 17, dans lequel l'extraction est réalisée en utilisant une énergie ultrasonique.

19. Procédé selon la revendication 18, dans lequel le dichlorométhane est utilisé en tant que solvant d'extraction et la fibre est enveloppée dans un lit d'eau.

20. Procédé selon l'une quelconque des revendications 15 à 19, dans lequel la température de séchage dans l'étape (b) est inférieure à 40 °C.

21. Procédé selon la revendication 20, dans lequel ladite température est comprise dans la plage allant de 10 à 30 °C.

22. Procédé selon l'une quelconque des revendications 15 à 21, dans lequel l'étape (c) est réalisée selon les conditions opératoires suivantes :
* Premier stade d'étirement : 100 °C et étirement jusqu'à un rapport d'étirement compris dans la plage allant de 6/1 à 10/1,
* deuxième stade d'étirement : 110 °C et étirement jusqu'à un rapport d'étirement compris dans la plage allant de 2/1 à 1/1,
* Troisième stade d'étirement : 120 °C et étirement jusqu'à un rapport d'étirement compris dans la plage allant de 1,5/1 à 1/1.
